Europäisches Patentamt

European Patent Office

Office européen des brevets

(11) Veröffentlichungsnummer: **0 097 855**

**A1**

(12) **EUROPÄISCHE PATENTANMELDUNG**

(21) Anmeldenummer: 83105694.0

(22) Anmeldetag: 10.06.83

(51) Int. Cl.³: **B 01 D 25/12**
**B 01 D 29/02**

(30) Priorität: 19.06.82 DE 3222987

(43) Veröffentlichungstag der Anmeldung:
11.01.84 Patentblatt 84/2

(84) Benannte Vertragsstaaten:
AT BE FR GB IT NL

(71) Anmelder: Grau Feinwerktechnik GmbH & Co.
Eschenstrasse 3
D-7926 Böhmenkirch(DE)

(72) Erfinder: Linser, Jörg, Prof. Dipl.-Ing.
Im Bürglesbühl 23
D-7072 Heubach/Lautern(DE)

(74) Vertreter: Lorenz, Werner, Dipl.-Ing.
Fasanenstrasse 7
D-7920 Heidenheim(DE)

(54) Plattenfilter.

(57) Ein Plattenfilter ist mit insbesondere horizontal angeordneten zusammenpressbaren Filterplatten (1), zwischen denen ein endloses Filterband (7) hindurchgeführt und über Umlenkrollen (12) umgelenkt ist, mit einer Verbindungseinrichtung (5) zwischen den Filterplatten, welche bei geöffneten Filterplatten einen Abstand zwischen den Filterplatten zuläßt, mit einer Schließeinrichtung für die Filterplatten, welche einen unteren (2) bzw. hinteren und einen oberen bzw. vorderen Deckel (4) aufweist, von denen einer in Richtung auf den anderen verschiebbar ist und wobei einer der Deckel mit einer sich über die Höhe bzw. Länge der Filterplatten erstreckenden Führung (4) verbunden ist, und mit Zu- und Ablaufleitungen zu den Filterplatten versehen. Die Verbindungseinrichtungen (5) sind seitlich an den Filterplatten so angeordnet und ausgebildet, daß wenigstens in einer Seitenrichtung auftretende Querkräfte durch sie aufgenommen sind.

Fig.1

./...

Fig 2

**0097855**

Heidenheim, 23.03.1983 - Kn

Akte: GR 902-Ausland

Anmelder:
=========


Grau Feinwerktechnik

GmbH & Co.

7926 Böhmenkirch


# Plattenfilter
==============


Die Erfindung betrifft einen Plattenfilter mit insbesondere horizontal angeordneten zusammenpressbaren
Filterplatten, zwischen denen ein endloses Filterband
hindurchgeführt und über Umlenkrollen umgelenkt ist,
mit einer Verbindungseinrichtung zwischen den Filterplatten, welche bei geöffneten Filterplatten einen
Abstand zwischen den Filterplatten zulassen, mit einer
Schließeinrichtung für die Filterplatten, welche einen
unteren bzw. hinteren und einen oberen bzw. vorderen
Deckel aufweist, von denen einer in Richtung auf den anderen verschiebbar ist und wobei einer der Deckel mit
einer sich über die Höhe bzw. Länge der Filterplatten
erstreckenden Führung verbunden ist, und mit Zu- und
Ablaufleitungen zu den Filterplatten.

Ein Plattenfilter dieser Art ist z.B. in der DE-OS 24 21 781 und
GB-OS 20 64 973 beschrieben. Dabei wird das endlose Filterband
jeweils zwischen zwei Filterplatten durchgeführt und
die Filterkammer wird zwischen zwei benachbarten Filterplatten gebildet.

Zum Entfernen des auf dem Filterband liegenden Filterkuchens wird die Schließeinrichtung geöffnet, wodurch
die Filterplatten um ein vorbestimmtes Maß voneinander
getrennt werden. Anschließend können die sich auf den
einzelnen Filterbandabschnitten befindenden Filterkuchen
durch ein entsprechendes Verschieben des Filterbandes
seitlich herausgefahren werden.

Bei dem bekannten Plattenfilter sind die einzelnen Filterplatten über die oberste Filterplatte an einer Jochplatte
aufgehängt. Die Jochplatte ist an einem Ständer befestigt
und ein auf der Unterseite der Filterplatten angeordneter
Hebetisch presst über einen Hydraulikzylinder die Filterplatten zusammen. Die Verbindungseinrichtungen zwischen
den einzelnen Filterplatten bestehen aus Laschenketten und
zusätzlichen Traglaschen. Auf diese Weise hängt jede
Filterplatte im geöffneten Zustand in der Laschenkette,
ohne durch ihr Gewicht die darüberliegende Filterplatte
zu beeinflußen. Das gesamte Gewicht wird über die Laschenketten auf die Jochplatte abgeleitet. Beim Schließen des
Plattenfilters legen sich dann die Filterplatten von unten
her beginnend aufeinander und die Kraft wird über die
Jochplatte und den Ständer abgeleitet.

Die Zu- und Abläufe zu den einzelnen Filterplatten erfolgen im allgemeinen über am Filterplattenrand angebrachte Augen, die im zusammengefahrenen Zustand des
Plattenfilters vertikal stehende Rohre ergeben.

Die bekannten Plattenfilter weisen verschiedene Nachteile
auf. So ist z.B. die Aufhängung der Filterplatten an einer
Jochplatte und den Säulen relativ aufwendig.

Durch eine Aufhängung der Filterelemente untereinander
über die Laschenketten muß bei einem Austausch eines Plattenfilters der Zugverband der Elemente untereinander aufgehoben werden. Dies verursacht einen erheblichen Arbeitsaufwand. Nachteilig ist weiterhin, daß die Laschenkette
keine seitliche Abstützung der Filterplatten ergibt.
Aus diesem Grunde müssen gesonderte Konstruktionen vorgesehen werden, die die seitlichen Querkräfte aufnehmen
bzw. ein Verschieben der Filterplatten vermeiden.

Der vorliegenden Erfindung liegt daher die Aufgabe zugrunde einen Plattenfilter der eingangs erwähnten Art zu
schaffen, welcher unter Verwendung von möglichst wenigen
Bauteilen einfach und funktionssicher ist, insbesondere
der eine exakte und störungsfreie Führung der Filterplatten
sichert.

Erfindungsgemäß wird diese Aufgabe dadurch gelöst, daß
die Verbindungseinrichtungen seitlich an den Filterplatten
so angeordnet und ausgebildet sind, daß wenigstens in
einer Seitenrichtung auftretende Querkräfte durch sie
aufgenommen sind.

Durch diese Maßnahme kann weitgehend auf Zusatzeinrichtungen zur Abstützung bzw. seitlichen Führung der Filterplatten verzichtet werden. Eine Ausgestaltung der Erfindung für die Verbindungseinrichtungen besteht darin, daß
sie wenigstens zwei auf gegenüberliegenden Seiten angeordnete Rollenketten aufweist, die jeweils mit
benachbart zueinander liegenden Filterplatten verbunden
sind und deren Länge dem maximalen Öffnungsabstand entspricht. Rollenketten nehmen in Querrichtung so hohe
Kräfte auf, daß sich weitere Führungseinrichtungen in
dieser Richtung erübrigen. Der Austausch einzelner Elemente
erfordert darüberhinaus keine Unterbrechung des Zugverbandes der Elemente untereinander. Im allgemeinen wird man
jeweils an einem Eck jeder Filterplatte eine Rollenkette
befestigen. Die Kettenlänge entspricht dabei dem
Abstand der Filterplatten in geöffnetem Zustand des
Plattenfilters. Fährt der Plattenfilter zu und verringert
sich dadurch der Abstand der Filterplatten, so knicken die Rollenketten aufgrund ihrer guten Beweglichkeit aus und
ermöglichen den Filterplatten die gewünschte gegenseitige
Annäherung und Verpressung. Zur besseren Führung kann
vorgesehen sein, daß an der Rollenkette auf der von der Filterplatte abgewandten Seite.
ein Anpressklotz angeordnet ist.

Eine andere Ausgestaltung der Verbindungseinrichtung besteht darin, daß jeweils zwischen den Filterplatten angeordnete vertikale Führungsbolzen  angeordnet sind, wobei
jeweils ein Ende des Führungsbolzens fest in einer Bohrung in der Filterplatte sitzt, während das andere Ende
in einer Bohrung in der benachbart dazu liegenden Filterplatte geführt und mit einem Endanschlag versehen ist.

Durch die Führungsbolzen wird eine exakte Führung der
Filterplatten in beide Richtungen erreicht.

Eine sehr vorteilhafte und erfinderische Weiterbildung
der Erfindung besteht darin, daß die Schließeinrichtung
seitlich neben den Filterplatten verlaufende Spindeln
aufweist, wobei der eine Deckel durch die Spindeln verschiebbar geführt und der andere Deckel im Bereich des
anderen Endes der Spindeln feststehend angeordnet ist.

0097855

Durch diese Ausgestaltung kann auf gesonderte Säulen vollständig verzichtet werden. Durch eine entsprechende Bewegung der Spindel-Muttern, was z.B. gemeinsam über einen Rollenkettenantrieb erfolgen kann, werden die Filterplatten geöffnet oder geschlossen.

Durch diese Ausgestaltung werden weniger Bauteile benötigt und es stellen sich keine seitlichen Behinderungen durch die Gestellsäulen nach dem Stand der Technik ein. Der Antrieb kann leicht zugänglich ausgebildet sein und außerhalb der Verschmutzungszone liegen.

Der Plattenfilter kann dabei so ausgestaltet sein, daß eine Vielzahl von Filterplatten vertikal hintereinander angeordnet sind oder horizontal übereinander liegen. Im allgemeinen wird man die zuletzt genannte Lösung bevorzugen. In diesem Falle sind die Spindeln senkrecht angeordnet und der obere Deckel wird durch die Spindel-Mutter verschoben. Durch diese Maßnahme unterstützt dann sogar das Gewicht des oberen Deckels die Pressung.

Zur seitlichen Führung der Filterplatten können auch Gleit-klötze dienen, die an den Spindeln geführt sind. Vorteilhafter Weise wird man die Gleitklötze mit den Rollenketten kombinieren und zwar derart, daß die Gleitklötze die seitliche Führung der Filterplatten in der Richtung übernehmen, in der die Rollenkette nicht wirkt.

Vorteilhafte Weiterbildungen und Ausgestaltungen der Erfindung sind aus den weiteren Unteransprüchen ersichtlich.

Nachfolgend sind anhand der Zeichnung prinzipmäßig Ausführungsbeispiele der Erfindung beschrieben.

Es zeigt:

Fig. 1          Eine Frontansicht eines Plattenfilters;

Fig. 2          Draufsicht auf eine Filterplatte (verkleinert);

Fig. 3          Eine vergrößerte Darstellung einer Ver-

                bindungseinrichtung durch eine Rollen-

                kette;

Fig. 4          Eine vergrößerte Darstellung einer Ver-

                bindungseinrichtung mit Führungsbolzen;

Fig. 5          Eine Darstellung nach Fig. 4 in Frontansicht;

Plattenfilter dieser Art sind allgemein bekannt, weshalb nachfolgend nur auf die für die Erfindung wesentlichen Teile näher eingegangen wird. Dargestellt ist ein Plattenfilter mit horizontal übereinander angeordneten Filterplatten, aber selbstverständlich ist es im Rahmen der Erfindung klar, daß auch eine Ausgestaltung eines Plattenfilters mit vertikal hintereinander liegenden Filterplatten möglich ist.

Der Plattenfilter weist eine Vielzahl von übereinander liegenden Filterplatten 1 auf, wobei die unterste Filterplatte 1 auf einem unteren Deckel 2 aufliegt, während über der obersten Filterplatte ein oberer Deckel 3 liegt. Seitlich im Bereich der vier Ecken der Filterplatten sind vertikale Spindeln 4 angeordnet, welche auf der Unterseite in einem gesonderten Gestellteil oder in dem Deckel 2 geführt sind. Der untere Deckel 2 ist feststehend ausgeführt. Der obere Deckel 3 ist mit Bohrungen versehen, durch die die Spindeln 4 gesteckt sind.

Der obere Deckel 3 wird nun durch die Spindeln 4 zum Öffnen oder Schließen der Filterplatten nach oben oder unten bewegt. Hierzu gibt es verschiedene Möglichkeiten. So können z.B. Spindelmuttern 4a über dem Deckel 3 mit einem Trapezgewinde versehen sein und die vier Spindelmuttern werden entsprechend angetrieben. Selbstverständlich ist jedoch auch ein Antrieb der Spindeln selbst möglich, wobei die Spindelmuttern 4a dann drehfest mit dem Deckel 3 verbunden sind.

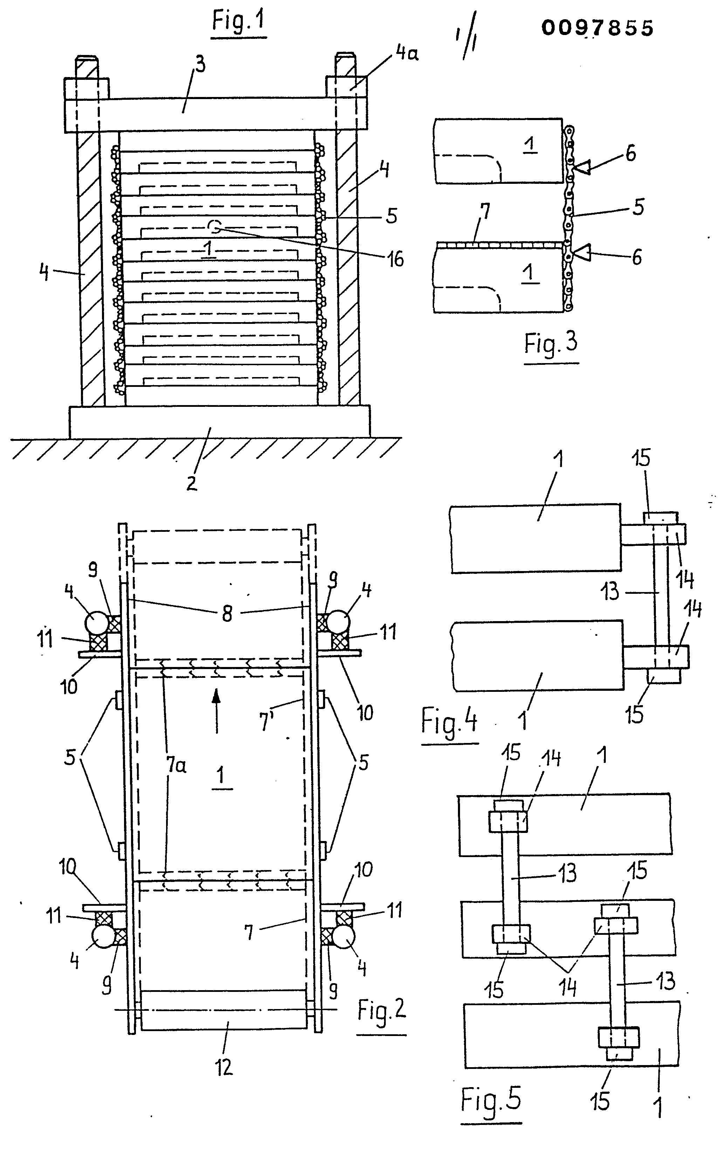

In den Figuren 1 und 2 und vergrößert in der Figur 3 ist eine Verbindungseinrichtung der einzelnen Filterplatten über Rollenketten 5 prinzipmäßig dargestellt. Jeweils zwei Rollenketten auf jeder Seite sind in Abstand voneinander angeordnet. Jede Rollenkette besteht in üblicher Weise aus seitlichen Laschen und Bolzen, in denen die Laschen eingehängt sind. Die Kette ist vorzugsweise durchgehend ausgebildet und wird jeweils durch Anspressklötze 6, an die dazugehörige Filterplatte gepresst. In der Fig. 3 ist auch das Filterband 7 dargestellt. In der Fig. 2 ist dessen Lage gestrichelt angedeutet. Das Filterband 7 kann in eine Vielzahl von einzelnen miteinander verbundenen Bandsegmenten 7' aufgeteilt sein. Die Bandsegmente 7' sind durch Federn 7a untereinander verbunden.

Aus der Fig. 2 wird ersichtlich, daß die Filterplatten horizontal in beiden Richtungen sicher geführt sind. Jede Filterplatte 1 ist auf zwei gegenüberliegenden Seiten von Rahmenteilen 8 eingefaßt, welche fest mit der jeweiligen Filterplatte verbunden sind. Die Rahmenteile 8 verlaufen in geringem Abstand an den Spindeln 4 vorbei. Jeweils im Bereich der Spindel ist ein Gleitklotz 9 mit dem Rahmenteil 8 verbunden, der jeweils auf der Spindel 4 gleiten kann.

Die Spindeln 4 haben über den maximalen Stellweg des
Deckels 3 Gewinde.  Durch die Gleitklötze 9 werden
die Filterplatten 1 quer zur Bandlaufrichtung spielfrei
gehalten. In der anderen Richtung sorgen die Rollenketten
5 für eine entsprechend exakte Führung.

Will man statt Rollenketten 5 einfachere Verbindungseinrichtungen zwischen den Filterplatten vorsehen, die keine
seitlichen Kräfte aufnehmen können, so können die Rahmenteile 8 mit weiteren seitlichen Rahmenteilen 10 in Form
von Auslegern versehen werden. Ordnet man zwischen den
Auslegern 10 und den Spindeln 4 ebenfalls Gleitklötze 11
an, so wird damit ebenfalls eine einwandfreie Führung der
Filterplatten in beiden Richtungen erreicht.

An den entsprechend verlängerten Rahmenteilen 8 kann jeweils auch eine Umlenkrolle 12 angeordnet werden, durch
die das Filterband entsprechend umgelenkt wird. In der
Fig. 2 sind im oberen Bereich gestrichelt die Umlenkrolle
und die beiden Rahmenteile für die darunter liegende
Filterplatte dargestellt.

In der Fig. 4 ist eine andere Verbindungseinrichtung für
die Filterplatten 1 dargestellt. In diesem Falle dienen

Führungsbolzen 13 und Führungslaschen 14 für eine exakte
Seitenführung der Filterplatten. Jeweils nahe den Ecken
der Filterplatte 1 sind Führungslaschen 14 befestigt
und zwei in vertikaler Richtung immer paarweise übereinander versetzt angeordnet. Durch Bohrungen in den
Führungslaschen sind die Führungsbolzen 13 in vertikaler
Richtung verschiebbar geführt. Zur Definierung eines exakten
Öffnungsweges sind die Führungsbolzen 13 dabei mit Anschlägen
15 versehen.

Im allgemeinen wird man für jede Filterplatte im Bereich
ihrer Ecken jeweils eine Führungslasche 14 vorsehen.
Jeweils über- und untereinander liegende Führungslaschen
14 von benachbarten Filterplatten wird man im allgemeinen
seitlich versetzt aus Platzgründen anordnen. Dies ist
in der Fig. 5 dargestellt.

Jede Filterplatte 1 ist mit nicht näher dargestellten Zu- und
Ableitungen 16 mit Schläuchen versehen, durch die Suspension
zugeführt wird. Bei der Entwässerung durch eine mit Druckluft
beaufschlagte Preßmembrane wird dann in üblicher Weise das
Filtrat hinter dem Filterband 7 über Rillen in der Filterplatte abgeleitet. Der auf dem Filterband 7 abgelagerte Filterkuchen wird nach einem Auseinanderfahren der Filterplatten 1 durch Anheben des Deckels 3 seitlich herausgefahren (z.B. in Position Fig. 3). Hierzu wird das endlose Filterband 7 entsprechend z.B. in Pfeilrichtung (Fig. 2) um etwas mehr als die Länge der Filterplatte 1 (Filterbandsegment 7') verschoben. Dabei fällt der Filterkuchen jeweils an den Umlenkrollen 12 ab. Das endlose Filterband 7 fährt danach wieder zurück oder es wird komplett um einen Takt weiterbewegt, so daß jedes Bandsegment 7' in die nachfolgende Filterplatte 1 einfährt.

**0097855**

Heidenheim, 23.03.1983 - Kn

Akte: GR 902-Ausland

- 2 -

Anmelder:

=========

Grau Feinwerktechnik

GmbH & Co.

7926 Böhmenkirch


P A T E N T A N S P R Ü C H E

===============================


1) Plattenfilter mit insbesondere horizontal angeordneten
   zusammenpressbaren Filterplatten, zwischen denen ein
   endloses Filterband hindurchgeführt und über Umlenkrollen umgelenkt ist, mit einer Verbindungseinrichtung
   zwischen den Filterplatten, welche bei geöffneten
   Filterplatten einen Abstand zwischen den Filterplatten
   zuläßt,   mit einer Schließeinrichtung für die Filterplatten, welche einen unteren bzw. hinteren und einen
   oberen bzw. vorderen Deckel aufweist, von denen einer
   in Richtung auf den anderen verschiebbar ist und wobei
   einer der Deckel mit einer sich über die Höhe bzw.

Länge der Filterplatten erstreckenden Führung verbunden ist, und mit Zu- und Ablaufleitungen zu den
Filterplatten

d a d u r c h    g e k e n n z e i c h n e t,  daß
die Verbindungseinrichtungen (5,13) seitlich an den
Filterplatten (1) so angeordnet und ausgebildet sind,
daß wenigstens in einer Seitenrichtung auftretende
Querkräfte durch sie aufgenommen sind.


2) Plattenfilter nach Anspruch 1

d a d u r c h    g e k e n n z e i c h n e t,  daß
die Verbindungseinrichtung wenigstens zwei auf gegenüberliegenden Seiten angeordnete Rollenketten (5) aufweist, deren Enden jeweils mit benachbart zueinander
liegenden Filterplatten (1) verbunden sind und deren
Länge dem maximalen Öffnungsabstand entspricht.


3) Plattenfilter nach Anspruch 2

d a d u r c h    g e k e n n z e i c h n e t,  daß
an der Rollenkette (5) auf der von der Filterplatte
(1) abgewandten Seite Anpressklötze (16) angeordnet
sind.


4) Plattenfilter nach Anspruch 1

d a d u r c h    g e k e n n z e i c h n e t,  daß

die Verbindungseinrichtung für die Filterplatten (1) durch
jeweils im Bereich ihrer Ecken befestigte Führungslaschen (14), die in vertikaler Richtung paarweise übereinander angeordnet sind, und durch Führungsbolzen (13)
bestimmter Länge mit Anschlägen (15), die in die
Bohrungen der Führungslaschen (14) gesteckt sind, gebildet ist.

5) Plattenfilter mit insbesondere horizontal angeordneten
zusammenpressbaren Filterplatten, zwischen denen ein
endloses Filterband hindurchgeführt und über Umlenkrollen umgelenkt ist, mit einer Verbindungseinrichtung
zwischen den Filterplatten, welche bei geöffneten
Filterplatten einen Abstand zwischen den Filterplatten
zuläßt, mit einer Schließeinrichtung für die Filterplatten, welche einen unteren bzw. hinteren und einen
oberen bzw. vorderen Deckel aufweist, von denen einer
in Richtung auf den anderen verschiebbar ist und wobei einer der Deckel mit einer sich über die Höhe bzw.
Länge der Filterplatten erstreckenden Führung verbunden ist, und mit Zu- und Ablaufleitungen zu den
Filterplatten
d a d u r c h  g e k e n n z e i c h n e t, daß
die Schließeinrichtung seitlich neben den Filterplatten
(1) verlaufende Spindeln (4) aufweist, wobei der eine Deckel (3) durch die Spindeln (4) verschiebbar geführt und der andere Deckel (2) im Bereich des
anderen Endes der Spindeln (4) feststehend angeordnet ist.


6) Plattenfilter nach Anspruch 5

d a d u r c h    g e k e n n z e i c h n e t, .daß
die Spindeln (4) senkrecht angeordnet sind und der
obere Deckel (3) verschiebbar geführt ist.

7) Plattenfilter nach Anspruch 5 oder 6

d a d u r c h   g e k e n n z e i c h n e t, daß
in Führungen des oberen Deckels (3) drehfest Spindelmuttern (4a) angeordnet sind, die synchron angetrieben
den Deckel auf dem Gewinde der Spindeln (4) heben oder
senken.


8) Plattenfilter nach einem der Ansprüche 5 bis 7

d a d u r c h    g e k e n n z e i c h n e t,  daß
die Filterplatten (1) im Bereich der Spindeln (4)
mit seitlich überstehenden Rahmenteilen (8,10) versehen sind, welche mit Gleitklötzen (9,11) verbunden
sind über die die Filterplatten (1) im wesentlichen
spielfrei wenigstens in einer Seitenrichtung zwischen
den Spindeln (4) geführt sind.

9) Plattenfilter nach Anspruch 8

   d a d u r c h   g e k e n n z e i·c h n e t, daß
   vier Spindeln (4) im Bereich der Ecken der Filterplatten (1) angeordnet sind, und die Rahmenteile
   Seitenarme (8,10) sind.


10) Plattenfilter nach Anspruch 9

   d a d u r c h   g e k e n n z e i c h n e t, daß
   in den Seitenarmen (8,10) die Umlenkrollen (12) für
   das endlos umlaufende Filterband (7) gelagert sind.

Fig.1

0097855

Fig.3

Fig.4

Fig.2

Fig.5

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | GB-A-2 036 580  (E. HOESCH)<br><br>* Seite 3, Zeilen 40-65; Seite 6, Zeilen 32-46; Seite 7, Zeilen 63-130; Seite 8, Zeilen 1-25 *<br><br>--- | 1,2,3, 10 | B 01 D  25/12<br>B 01 D  29/02 |
| Y | DE-A-1 930 117  (SCHNEIDER)<br>* Seite 4, Zeilen 32-35; Seiten 5,6; Seite 7, Zeilen 1-21 *<br><br>--- | 1,4 | |
| Y | DE-C- 204 566  (MASCHINENFABRIK F. WEIGEL NACHF.)<br>* Seiten 1-2 *<br><br>--- | 5,6,8 | |
| Y | FR-A-2 042 143  (KEN-ICHIRO KORITA)<br>* Seite 3, Zeilen 1-18 *<br><br>--- | 1,4 | RECHERCHIERTE SACHGEBIETE (Int. Cl. ³) |
| A | FR-A-1 451 655  (WEIR)<br><br>--- | 1,4 | B 01 D |
| A | CH-A- 480 856  (FILTROX)<br><br>--- | | |
| A | FR-A- 963 183  (CHERRY-BURRELL)<br><br>----- | | |

Der vorliegende Recherchenbericht wurde für alle Patentansprüche erstellt.

| Recherchenort<br>DEN HAAG | Abschlußdatum der Recherche<br>23-09-1983 | Prüfer<br>DE PAEPE P.F.J. |
|---|---|---|